# EUROPEAN PATENT APPLICATION

(11) **EP 1 391 287 A1**
(43) Date of publication of application: **25.02.2004**
(21) Application number: 03254004.9
(22) Date of filing: 25.06.2003
(51) Int. Cl.: B29C 49/00, B29C 47/22, B29C 69/00

(54) **Extrusion blow molding method and article made thereby**

(30) Priority: 20.08.2002 US 224101
(71) Applicant: Sonoco Development, Inc., Hartsville, South Carolina 29550 (US)
(72) Inventor: Martin, Michael Kent, Hartsville, South Carolina 29550 (US); Case, Manson Drew, Hartsville, South Carolina 29550 (US)
(74) Representative: MacDougall, Donald Carmichael

(57) **Abstract**

A process for extrusion blow molding an article, and an extrusion blow-molded article, in which a solid radially outwardly extending flange (26) is blown into the tubular side wall (24) of the article. A circumferentially extending groove is formed in the inner surface of the mold that molds the tubular side wall of the article. A parison (58) of molten thermoplastic material is extruded and the parison is inflated by blowing to blow the parison against the walls of a mold (60). During inflation, the groove is filled by the molten thermoplastic material. The material that filled the groove forms a solid radially outwardly extending flange (26) molded to the tubular side wall (24) of the article. A portion (70) of the article extending above the flange is severed in a single cutting step to form an article having an outward flange at its top end.

## Description

### FIELD OF THE INVENTION

The invention relates to extrusion blow molding processes and to articles made by such processes.

### BACKGROUND OF THE INVENTION

Conventional extrusion blow-molded containers generally have small-diameter top ends that are threaded to accept screw-on caps. In some applications, such top ends are undesirable because of the nature of the contents of the container, which in some cases may require wide-mouth openings to facilitate getting the contents into and out of the container. Thus, alternative closures such as seal-on membranes or seamed-on metal closures would be desirable in many cases.

However, it has not been practical or cost-effective to employ seal-on membranes or seamed-on metal end closures for such containers because the blow-molding process has not allowed for easily making the type of flat, outwardly extending flanges required for such closures. To provide such a flange in a blow-molded container, it has been necessary to form an intermediate blow-molded article in a particular manner and then perform finishing operations on the intermediate article. More specifically, the tubular side wall of the intermediate article is molded to include a hollow generally U-shaped section that extends radially outwardly from the side wall. A lower leg of the U-shaped section extends generally radially and will form the flange on a finished container. The lower leg is joined at its outer end to the rest of the generally U-shaped section. After removing the intermediate article from the mold, the article is subjected to two separate cutting operations. In a first cutting operation, a cut is made near the outer edge of the lower leg of the U-shaped section to sever the leg from the rest of the section. A second trimming operation is then performed by cutting through the lower leg in the axial direction to remove a radially outer end portion of the leg. The remaining portion of the leg thus forms a flange on the container. This post-mold finishing process is relatively complicated and costly. It would be desirable to provide a flanged container in a simpler and less costly manner.

It has also been suggested, for instance in U.S. Patent No. 4,496,064, that a high degree of biaxial orientation in the flange of a plastic container is needed to tolerate high bending stresses placed on the flange when a metal closure is double-seamed onto the container. The '064 patent teaches a stretch blow molding and finishing process to achieve such high degree of biaxial orientation. In particular, an intermediate article is stretch blow molded and post-mold finishing operations are performed as previously described to produce the finished container, such that the flange is formed from a portion of the intermediate article subjected to biaxial stretching. As noted, the post-mold finishing operations are relatively costly. The stretch blow-molding process also requires the separate formation of a preform, such as by injection molding, thus further complicating the manufacturing process. Furthermore, with the stretch blow-molding process, the flange thickness is constrained to be uniform in the radial direction and essentially equal to the thickness of the side wall of the container. It would be desirable to be able to vary the flange thickness and/or profile as required in each instance.

### SUMMARY OF THE INVENTION

The present invention addresses the above needs and achieves other advantages, by providing a process for extrusion blow molding an article, and an extrusion blow-molded article, in which a solid radially outwardly extending flange is blown into the tubular side wall of the article. A circumferentially extending recess or groove is formed in the inner surface of the mold that molds the tubular side wall of the article. A parison of molten thermoplastic material is extruded from an annular throat of a die, and the parison is enclosed in the mold. The parison is inflated by blowing to blow the thermoplastic material against the walls of the mold. During the inflation, the groove is filled by the molten thermoplastic material. The material cools and solidifies and the resulting article is removed from the mold. The material that filled the groove forms a solid radially outwardly extending flange molded to the tubular side wall of the article.

To ensure sufficient material to fill the groove, the width of the annular throat of the die, which controls the thickness of the wall of the extruded parison, preferably is substantially increased in a localized region of the parison corresponding to the groove. In a preferred embodiment, the die throat size is varied by a rapidly responsive actuator such as a servo or the like, which is controlled by a microprocessor controller to open up the die throat at the appropriate time and by the appropriate amount. The resulting parison thus has a localized region in which the wall is substantially thicker than in the rest of the parison, and this region is axially located in registration with the groove in the mold wall. Accordingly, the groove can be filled with material and yet the inner surface of the blow-molded article in the region of the groove does not necessarily have a corresponding depression. In another embodiment, a depression of a controlled size is intentionally created through suitable control of the die throat width to create a thinned region functioning as a hinge for the flange for purposes explained below.

In accordance with the invention, the flange profile is dictated by the configuration of the groove in the mold wall. Thus, precise final dimensions of the flange can be achieved in the molding process, such that no trimming of the outer edge of the flange is required. The thickness of the flange can bear any desired relation to the thickness of the tubular side wall of the blow-molded article, i.e., the flange can be thicker, thinner, or of the same thickness as the side wall. Additionally, the flange thickness can be nonuniform in the radial direction; for example, the flange can taper in thickness toward its outer edge. It is also possible for the flange thickness to vary in the circumferential direction, if desired, by suitably configuring the groove in the mold. Indeed, the invention enables great latitude in configuring the flange in a myriad of possible ways.

To make an extrusion blow-molded article such as a container in accordance with the invention, an intermediate article is blow molded as described above, wherein the flange is molded onto the top end of what will become the tubular side wall of the container. An accommodation portion of tubular shape, which will be removed to finish the container, is formed as an extension of the tubular side wall; the flange thus is integrally joined to the juncture between the top end of the tubular side wall and the accommodation portion. After removing the intermediate article from the mold, the accommodation portion is removed by cutting in a radial direction to sever the accommodation portion from the flange; the resulting cut surface preferably is substantially flush with the upper surface of the flange. Thus, only a single cutting operation is needed.

An extrusion blow-molded container in accordance with one embodiment of the invention comprises a base wall, a tubular side wall having a bottom end joined to the base wall and an opposite top end defining a container opening, and a solid flange integrally molded to the top end of the side wall and extending radially outwardly thereof, the flange having a radially outermost edge that is molded by a mold surface during the extrusion blow molding of the container. Molding the outermost edge of the flange enables the radial extent of the flange to be precisely controlled without requiring a trimming operation.

In accordance with another embodiment of the invention, an extrusion blow-molded container comprises a base wall, a tubular side wall having a bottom end joined to the base wall and an opposite top end defining a container opening, and a solid flange integrally molded to the top end of the side wall and extending radially outwardly thereof, the flange being formed by blowing molten thermoplastic material into a groove formed in a side wall inner surface of a blow mold such that the material fills the groove, whereby upper and lower surfaces of the flange comprise molded surfaces that are molded by surfaces of the groove. Molding the upper and lower surfaces of the flange by mold surfaces enables the thickness of the flange to be precisely controlled and, as already noted, varied in different directions if desired.

An extrusion blow-molded container in accordance with yet another embodiment of the invention comprises a base wall, a tubular side wall having a bottom end joined to the base wall and an opposite top end defining an opening of the container, and a solid radially outwardly extending flange integrally molded onto the top end of the side wall, at least a portion of the flange having a thickness different from that of the side wall. With conventional blow-molding of flanges as described above, the flange is constrained to have essentially the same thickness as the tubular side wall of the container. The invention, in contrast, enables the flange thickness to be different from that of the side wall. The flange thickness can be uniformly less or greater than the side wall thickness, or the flange thickness can vary in the radial direction such that part of the flange is thicker and/or part of the flange is thinner than the side wall.

In another aspect of the invention, an extrusion blow molded intermediate article of manufacture for making a container comprises a base wall, a generally tubular side wall having a bottom end joined to the base wall and an opposite top end spaced from the base wall, a generally tubular accommodation portion extending from the top end of the side wall up to an upper end of the intermediate article, and a solid radially outwardly extending flange blow molded so as to integrally join the top end of the side wall and the accommodation portion at a juncture therebetween, the flange extending radially outward of immediately adjacent portions of the side wall and the accommodation portion. As noted, the container is fashioned from the intermediate article by severing the accommodation portion from the tubular side wall and flange.

The invention also encompasses methods for extrusion blow molding an article. In one embodiment, the method comprises the steps of:
extruding a tubular parison of molten thermoplastic material from an annular throat of a die;
enclosing the parison in a mold and closing one end of the parison, the mold having a side wall inner surface encircling a central longitudinal axis of the mold and having a base wall inner surface adjacent the closed end of the parison;
providing a groove in the side wall inner surface of the mold at a location spaced longitudinally from opposite ends of the side wall inner surface, the groove extending circumferentially; and
inflating the parison to cause the parison to expand against and conform to the side wall and base wall inner surfaces of the mold to form an article comprising a base wall and a tubular side wall having a first end joined to the base wall and an opposite second end spaced from the base wall;
wherein during the inflating step the molten thermoplastic material is blown into the groove in the mold such that the groove is substantially entirely filled by the molten material so as to form a solid flange extending radially outwardly from the side wall of the article.

As noted, during the extrusion of the parison, preferably a localized region of the parison having substantially greater thickness than the rest of the parison is created by suddenly enlarging the die throat for a short period of time and then suddenly constricting the die throat again. Thus, a trace of the die throat size versus time is characterized by a sharp "spike" or the like corresponding to the location of the groove in the mold. The die throat in the spike region preferably is enlarged to at least about 5 times the width that exists outside the spike region, and more preferably at least about 10 times the width that exists outside the spike region. The die throat size preferably is controlled by a rapidly responsive actuator such as a servo or the like.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a perspective view of an extrusion blow-molded container in accordance with one preferred embodiment of the invention;
FIG. 2 is a cross-sectional view through the tubular side wall and flange of the container of FIG. 1;
FIG. 3 is a diagrammatic view of an extrusion blow-molding apparatus in accordance with the invention, showing a parison having been extruded and the mold halves about to enclose the parison;
FIG. 4 shows the mold closed and the parison inflated against the mold walls, with the groove in the mold wall being filled with the thermoplastic material;
FIG. 5 shows the resulting blow-molded intermediate article of manufacture in accordance with an embodiment of the invention, and illustrates a cutting operation for removing an accommodation portion of the article to produce the article of FIG. 1;
FIG. 6 shows an alternative flange configuration in which the flange is thinner than the tubular side wall of the blow-molded article;
FIG. 7 shows another alternative flange configuration in which the flange is thicker than the side wall;
FIG. 8 shows still another flange configuration in which the flange tapers toward its outer edge;
FIG. 9 shows a further flange configuration in which a thinned region is created at the juncture between the flange and side wall to form a hinge region about which the flange can rotate;
FIG. 10 is a schematic depiction of a container in accordance with the invention and a metal end closure being placed onto the open top end of the container;
FIG. 11 shows the container of FIG. 10 with the metal end closure seamed on by crimping the curled outer edge of the closure with the flange of the container whereby the flange is rotated or folded under to interlock with the curled edge of the closure;
FIG. 12 is a schematic depiction of a container in accordance with the invention and a flexible membrane closure being placed onto the open top end of the container;
FIG. 13 shows the container of FIG. 12 with the membrane closure sealed onto the flange of the container; and
FIG. 14 shows a trace of relative die throat size versus time used for extrusion of a parison in accordance with one method embodiment of the invention.

### DETAILED DESCRIPTION OF PREFERRED EMBODIMENTS

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

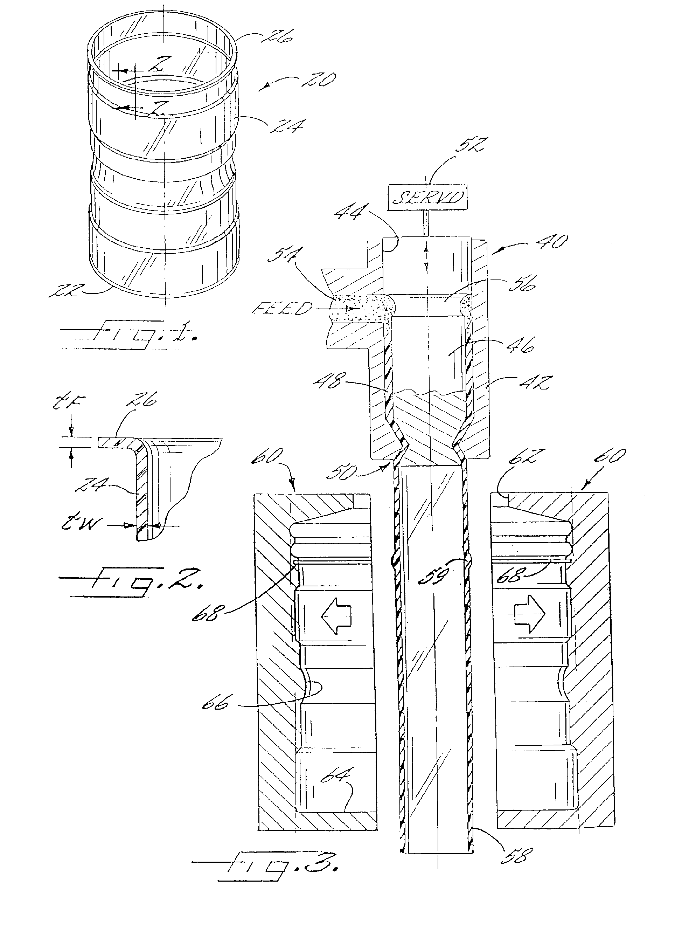

FIG. 1 shows an extruded blow-molded container **20** in accordance with one embodiment of the invention. The container comprises a base wall **22**, and a tubular side wall **24** whose bottom end is joined with the base wall. In the illustrated embodiment, the side wall **24** has a circular cross-section and includes several sections of different diameters and shapes to impart an aesthetically pleasing appearance to the container. However, it will be recognized that extrusion blow-molded articles can be made to have various cross-sectional shapes other than circular, the side wall can be straight, tapered, and/or contoured in various ways as desired, and other features such as handles or other projections can be included. The invention thus is not limited to any particular shape of article, the container **20** being shown merely as a representative example for explanatory purposes. Articles in accordance with the invention can be extrusion blow molded from any of various suitable thermoplastic materials, including HDPE, LDPE, polypropylene, PVC, PET, polycarbonate, EVOH, and others.

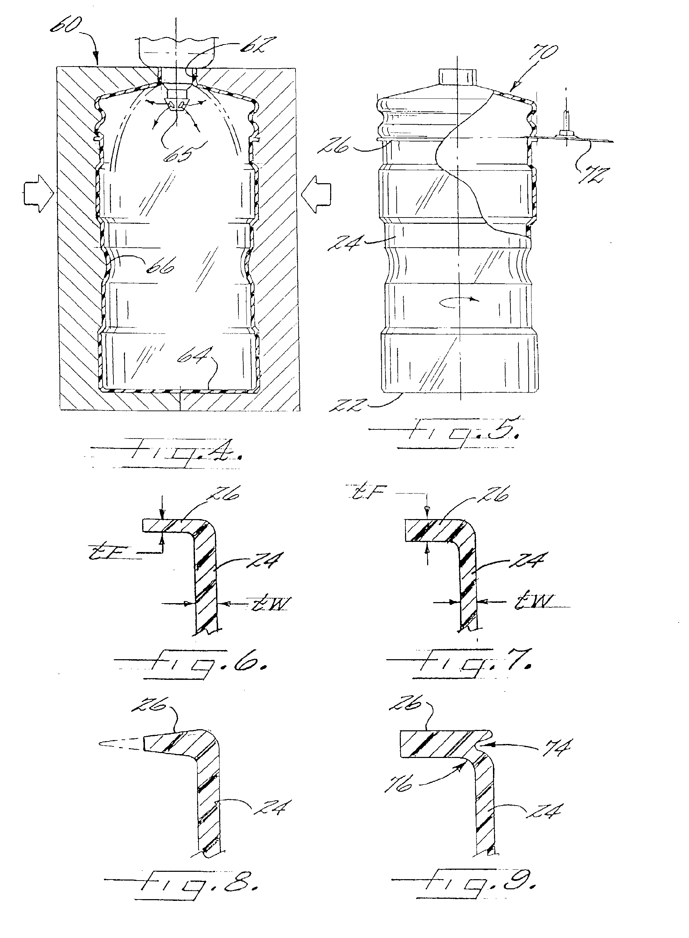

The container **20** also includes a solid radially outwardly extending flange **26**, shown in greater detail in FIG. 2, integrally molded to the top end of the side wall **24**. The term "solid" as it refers to the flange is used herein to mean that the flange is not hollow; i.e., the flange has an upper surface **28** and a lower surface **30**, and between such surfaces is continuous thermoplastic material.

The flange **26** also includes a radially outermost edge **32**. In accordance with the invention, the upper surface **28**, lower surface **30**, and edge **32** of the flange are molded by mold surfaces during the extrusion blow molding of the container, as further explained below. Accordingly, the contour and dimensions of the flange **26** can be precisely controlled and no trimming of the flange is needed after molding to achieve a desired diameter of the flange.

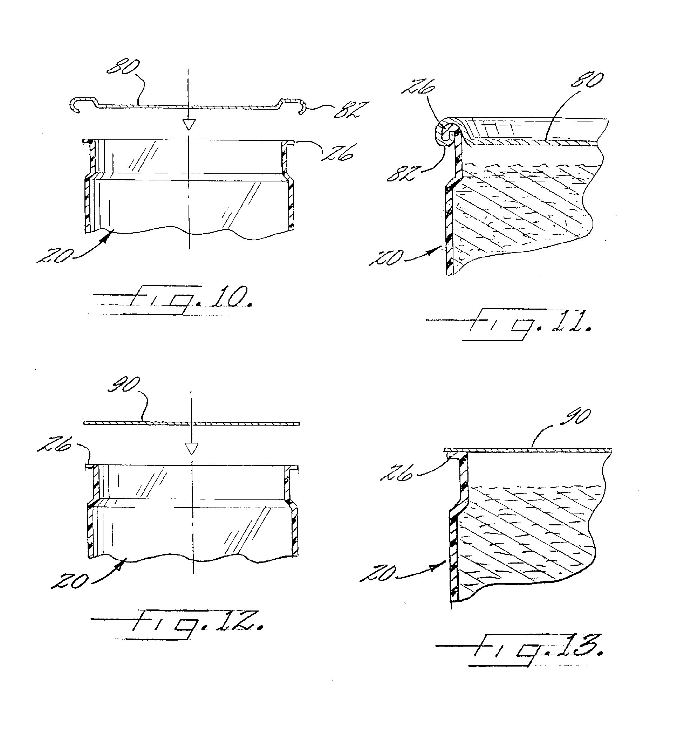

The flange **26** is formed by blowing molten thermoplastic material into a groove formed in the surface of the blow mold. FIG. 3 diagrammatically depicts an apparatus for extrusion blow molding the flanged container of FIGS. 1 and 2. The apparatus includes a die **40** and a mold **60**. The die can be a conventional variable-throat extrusion die for extruding tubular parisons of molten thermoplastic material fed into the die. In general, as shown, the die will include a body **42** defining a passage **44** therethrough of generally circular cross-section. Disposed coaxially in the passage is a die throat plug **46** of similar cross-section to the passage **44** but of smaller diameter such that an annular space **48** exists between the plug and inner wall of the passage. The passage and plug both have end regions of converging-diverging shape wherein the diverging section terminates at a discharge opening or throat **50** of the die. The die throat plug **46** is axially movable within the passage **44** to vary the width of the die throat **50** so as to vary the thickness of the wall of a parison extruded from the die; more particularly, moving the plug upward in FIG. 3 narrows the die throat and thus makes the parison wall thinner, while moving the plug downward widens the throat and makes the parison wall thicker. Preferably, the plug **46** is moved by a rapidly responsive actuator such as a servo **52** controlled by a suitable microprocessor controller (not shown).

Molten thermoplastic material is fed into the die **40** through an infeed port **54** that leads into the passage **44**. The die throat plug **46** includes an annular recess **56** to facilitate distributing the incoming molten material about the circumference of the plug. The molten material then flows down through the annular space **48** of the die and is discharged from the die throat **50** to form a parison **58** of molten material.

The mold **60** is provided in two complementary halves that are movable toward and away from each other. Once the parison **58** has been extruded to the desired length based on the length of the article to be produced, the mold halves are brought together to enclose the parison in the mold. In the process of closing the mold, one end of the parison, in this case the leading end, is pinched off and closed by the mold, and the opposite end, in this case the trailing end, is severed from the extrudate that continues to be extruded from the die; as known in the art, it is possible to reverse the mold orientation so that the trailing end of the parison is pinched and closed. The opposite end of the parison from the closed end remains open and extends into an opening **62** in the closed mold **60**.

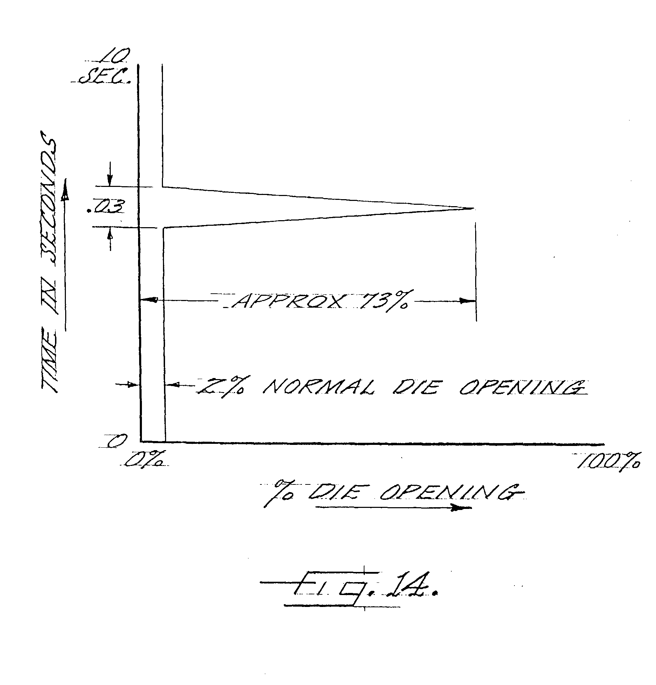

Next, a blow pin **65** is inserted into the opening **62** of the mold and sealingly engages the open end of the parison, and air is blown through the blow pin into the interior of the parison to inflate the parison so that the still-flowable material expands against the inner surfaces of the mold as shown in FIG. 4. The mold includes a base wall inner surface **64** for shaping the base wall of the blow-molded article, and a side wall inner surface **66** for shaping the tubular side wall of the article. Once the parison has been expanded to fill the mold, the material is cooled to solidify it, and then the mold is opened to remove the article from the mold. The resulting article, referred to as an intermediate article of manufacture herein, is shown in FIG. 5.

In accordance with the invention, the mold side wall inner surface **66** includes a circumferential groove **68** for forming the flange on the top end of the side wall of the container **20.** The groove **68** is located at the juncture between the portion of the mold surface that shapes the side wall **24** of the finished article **20** and the portion of the mold surface that shapes an accommodation portion **70** (FIG. 5) of the intermediate article that is joined to the top end of the side wall. The accommodation portion does not form a part of the finished container but is removed in a post-molding finishing operation as further explained below.

The groove **68** in the mold surface is configured as a negative image of the desired flange profile. During the inflation of the parison, flowable thermoplastic material is blown into the groove **68** to substantially fill the groove. The resulting article as shown in FIG. 5 thus has a solid radially outwardly extending flange **26** integrally molded to the top end of the side wall **24** at the juncture between the side wall **24** and the accommodation portion **70**.

To make the finished container **20**, the accommodation portion **70** must be severed from the top end of the side wall **24** and the flange **26**. Advantageously, only a single cut need be made to accomplish this. As shown in FIG. 5, a suitable cutting device such as a rotating saw or blade **72** is used to make a cut in the radial direction (i.e., along a plane normal to the longitudinal axis of the container) through the article along a plane substantially flush with the upper surface **28** of the flange **26.** The resulting cut surface thus is substantially flush with the flange upper surface.

An important aspect of the invention relates to ensuring that there is sufficient thermoplastic material to fill a groove **68** having a substantial radial depth. Without sufficient material available in the parison, an acceptable solid flange cannot be extruded unless the flange's radial extent is very small (e.g., a radial extent substantially less than the thickness of the side wall **24** of the container). However, solid flanges of considerable radial extent (e.g., equal to or greater than the side wall thickness) are desired in some cases. To achieve this object, the invention encompasses a method of extruding the parison so that sufficient thermoplastic material is provided in a localized region of the parison corresponding to the location of the groove **68** in the mold wall so that the groove will be substantially filled with material.

More particularly, as noted above, the extrusion die **40** preferably includes a servo **52** or other suitable rapidly responsive actuator for moving the die throat plug **46** to control parison thickness. In accordance with the invention, as the parison is being extruded, the die throat size is set at a relatively small width for extruding the portions of the parison that will form the base wall **22** and side wall **24** of the container. At a location of the parison corresponding to the location of the groove **68** in the mold, however, the die throat plug **46** is very rapidly moved to substantially enlarge the width of the die throat (e.g., to at least about 5 times the width before the enlargement, or to at least about 10 times the prior width in some cases), and then after a very short period of time the plug **46** is rapidly moved back to constrict the die throat again to extrude the part of the parison corresponding to the accommodation portion **70** of the molded article. Thus, the die throat size is "spiked" upwardly in the region of the groove **68**.

An exemplary trace of relative die throat size versus time is shown in FIG. 14, illustrating the spike. The die throat size is capable of being adjusted (via the movable die throat plug **46** controlled by the servo **52**) to substantially any size between zero percent (completely closed) and 100 percent (maximum size). As shown in FIG. 14, the majority of the parison is extruded with the die throat set at two percent of its maximum size. However, in the region corresponding to the groove in the mold wall, the die throat size is substantially instantaneously increased to about 73 percent and then is substantially instantaneously reduced again back to two percent. The time period consumed by this spike in die throat size is about 0.03 second, compared to a total time of about 10 seconds for extruding the entire parison. Consequently, the parison has a localized region 59 (FIG. 3) having a substantially thicker wall than the rest of the parison, and this thicker region is in registration with the groove **68**. The thicker region provides the needed material to fill the groove without creating a substantial depression at the inner surface of the article where the flange is located.

The invention enables flanges of various configurations to be produced simply by appropriately configuring the groove in the mold surface and then suitably controlling the die to extrude sufficient material in the region of the groove to fill the groove. The flange **26** can have a thickness ***t***_{***F***} that is about the same as the thickness ***t***_{***W***} of the side wall **24**, as shown in FIG. 2. Alternatively, as shown in FIG. 6, the flange thickness ***t***_{***F***} can be less than the side wall thickness ***t***_{***W***}. FIG. 7 depicts another embodiment in which the flange thickness ***t***_{***F***} is greater than the side wall thickness ***t***_{***W***}***.*** In preferred embodiments of the invention, the side wall thickness and flange thickness each ranges from about 0.01 inch to about 0.06 inch (about 0.25 mm to about 1.5 mm).

It is also possible to produce flanges in which the thickness varies in at least one direction such as the radial direction or the circumferential direction. For instance, FIG. 8 shows an embodiment in which the thickness of the flange **26** decreases in the radially outward direction such that the flange tapers. If desired, the thickness can be non-zero at the outer edge as shown in solid line, or can be essentially zero at the outer edge as shown in phantom line.

FIG. 9 shows yet another variation in which an intentionally created depression **74** is formed at the inner surface of the article at the location of the flange, by extruding the parison to have slightly less material in the region of the groove in the mold wall than needed to completely fill the groove. As a result, a thinned region **76** is formed at the juncture between the flange **26** and the side wall **24** (i.e., thinned relative to the flange). The thinned region **76** can serve as a sort of hinge about which the flange can rotate more readily than it otherwise would, which can be advantageous for example in seaming a metal end closure onto the open end of the container.

FIG. 10 schematically depicts such a metal end closure **80** being placed atop the container **20** in preparation for seaming the closure on the container. As is conventional, such a metal closure at its outer edge has a curled region **82**. To seam-on the closure, the curled region **82** is deformed by suitable tooling to fold down and interlock with the flange **26**, which is also folded down in the process, resulting in a seam as shown in FIG. 11. The previously described hinge region of the flange facilitates this folding down of the flange in the seaming operation.

As an alternative to a seamed-on metal end closure, a flexible membrane closure **90** can be used with the container **20** as shown in FIGS. 12 and 13 respectively depicting the membrane closure before and after sealing onto the upper surface of the flange **26**. The closure **90** can be attached to the flange **26** in various ways. In one embodiment, a layer of appropriate heat seal material can be provided on the underside of the closure and the container can be made of a compatible heat sealable material, and the closure can be heat sealed onto the flange. Alternatively, a suitable adhesive can be used to attach the closure to the flange.

A container in accordance with the invention can also be used with a snap-on cap. More particularly, the container flange and the cap can be designed in terms of configuration and materials so that the cap can readily be snapped onto the flange and can be removed and replaced repeatedly. The snap-on cap can be an overcap that initially fits over another closure member for hermetically sealing the container. The other closure member can be, for example, a heat-sealed closure such as a membrane. To initially open the container, the overcap is pried from the flange and the closure member is removed. Subsequently, the container can be closed again by snapping the overcap back onto the flange. The amount of force required to snap the overcap onto the flange and to pry the overcap off will generally depend on the flexibility of the overcap and flange and the particular configuration of the flange and the cooperative engagement surfaces of the overcap. The invention enables the flange to be formed as needed to accomplish whatever flange configuration and flexibility are desired.

By incorporating such a snap-on closure or overcap, the invention avoids costly screw cap closures typically used with many extrusion blow-molded containers. Such screw caps require more care to re-seal effectively, relative to the snap-on closure. Additionally, such screw caps can be an obstacle for some people, particularly those with conditions of the wrist, hand, or fingers (e.g., arthritis) that make it hard or painful to grip and twist the cap with sufficient force to operate the cap. Such people may find it easier to operate the snap-on closure in accordance with the invention.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An extrusion blow-molded intermediate article of manufacture for making a container, the intermediate article comprising:
a base wall;
a generally tubular side wall having a bottom end joined to the base wall and an opposite top end spaced from the base wall;
a generally tubular accommodation portion extending from the top end of the side wall up to an upper end of the intermediate article; and
a solid, radially outwardly extending flange blow molded so as to integrally join the top end of the side wall and the accommodation portion at a juncture therebetween, the flange extending radially outward of immediately adjacent portions of the side wall and the accommodation portion.

2. The intermediate article of claim 1, wherein at least a portion of the flange has a thickness different from that of the side wall.

3. The intermediate article of claim 1, wherein the flange has a thickness that is uniform in a radial direction of the flange and is different from a thickness of the side wall at the top end thereof.

4. The intermediate article of claim 1, wherein the flange has a thickness that varies in a radial direction of the flange.

5. The intermediate article of claim 4, wherein the flange tapers in thickness in the radial direction.

6. An extrusion blow-molded container, comprising:
a base wall;
a tubular side wall having a bottom end joined to the base wall and an opposite top end defining a container opening; and
a solid flange integrally molded to the top end of the side wall and extending radially outwardly thereof, the flange having a radially outermost edge that is molded by a mold surface during the extrusion blow molding of the container.

7. The container of claim 6, wherein the flange is annular and the molded outermost edge of the flange has a radius that is substantially uniform about a circumference of the flange.

8. The container of claim 6, wherein at least a portion of the flange has a thickness greater than that of the tubular side wall.

9. The container of claim 6, wherein the flange has a thickness that varies in the radial direction.

10. The container of claim 9, wherein the flange tapers in the radial direction.

11. The container of claim 6, wherein the side wall and flange each has a thickness from about 0.01 inch to about 0.06 inch.

12. The container of claim 6, further comprising a metal end closure seamed onto the container, the closure having an outer curled edge interlocked with the flange.

13. The container of claim 12, wherein the container includes a hinge region at a juncture between the tubular side wall and the flange, the hinge region being thinner than the side wall and flange to facilitate rotation of the flange about the hinge region during seaming of the end closure.

14. The container of claim 6, further comprising a flexible membrane end closure sealed onto the flange to hermetically close the container.

15. An extrusion blow-molded container, comprising:
a base wall;
a tubular side wall having a bottom end joined to the base wall and an opposite top end defining a container opening; and
a solid flange integrally molded to the top end of the side wall and extending radially outwardly thereof, the flange being formed by blowing molten thermoplastic material into a groove formed in a side wall inner surface of a blow mold such that the material fills the groove, whereby upper and lower surfaces of the flange comprise molded surfaces that are molded by surfaces of the groove.

16. The container of claim 15, wherein a radially outermost edge of the flange comprises a molded edge that is molded by a surface of the groove, whereby trimming of the outermost edge is unnecessary.

17. The container of claim 15, wherein at least a portion of the flange has a thickness greater than that of the side wall.

18. The container of claim 15, wherein at least a portion of the flange has a thickness less than that of the side wall.

19. The container of claim 15, wherein the flange has a thickness that varies in the radial direction.

20. The container of claim 19, wherein the flange tapers in thickness.

21. A method for making an extrusion blow-molded article, the method comprising the steps of:
extruding a tubular parison of molten thermoplastic material from an annular throat of a die;
enclosing the parison in a mold and closing one end of the parison, the mold having a side wall inner surface encircling a central longitudinal axis of the mold and having a base wall inner surface adjacent the closed end of the parison;
providing a circumferentially extending groove in the side wall inner surface of the mold at a location spaced longitudinally from the base wall inner surface; and
inflating the parison to cause the parison to expand against and conform to the side wall and base wall inner surfaces of the mold to form an article comprising a base wall and a tubular side wall;
wherein during the inflating step the molten thermoplastic material is blown into the groove in the mold such that the groove is substantially entirely filled by the molten material so as to form a solid flange extending radially outwardly from the side wall of the article.

22. The method of claim 21, further comprising the step of removing that portion of the article that extends above the flange.

23. The method of claim 21, wherein the extruding step comprises suddenly enlarging the width of the annular throat of the die when extruding a localized region of the parison corresponding to the groove in the mold to substantially thicken the parison in said localized region so as to provide sufficient molten material to fill the groove.

24. The method of claim 23, wherein the die throat is suddenly enlarged via a rapidly responsive actuator.

25. The method of claim 23, wherein after the localized region of the parison corresponding to the groove is extruded, the die throat is suddenly constricted to extrude an end portion of the parison.

26. The method of claim 23, wherein the die throat width used for extruding said localized region of the parison is at least 5 times the die throat width used for extruding portions of the parison that form the base wall and that portion of the side wall that extends from the base wall to the flange.

27. The method of claim 26, wherein the die throat width used for extruding said localized region of the parison is at least 10 times the die throat width used for extruding the portions of the parison that form the base wall and the portion of the side wall that extends from the base wall to the flange.

28. The method of claim 21, wherein the groove is provided to have a depth in a radial direction corresponding to a desired radial extent of the flange.

29. The method of claim 28, wherein the groove is provided to have a width that is substantially constant in the radial direction, whereby the flange is made to have a radially uniform thickness.

30. The method of claim 29, wherein the groove is provided to have a width greater than a predetermined thickness of the side wall of the article, whereby the flange is made thicker than the side wall.

31. The method of claim 29, wherein the groove is provided to have a width less than a predetermined thickness of the side wall of the article, whereby the flange is made thinner than the side wall.

32. The method of claim 28, wherein the groove is provided to have a width that varies in the radial direction, whereby the flange is made to have a radially varying thickness.

33. An extrusion blow-molded container, comprising:
a base wall;
a tubular side wall having a bottom end joined to the base wall and an opposite top end defining an opening of the container; and
a solid radially outwardly extending flange integrally molded onto the top end of the side wall, at least a portion of the flange having a thickness different from that of the side wall.

34. The container of claim 33, wherein the flange has a thickness that varies in a radial direction of the flange.

35. The container of claim 34, wherein the flange tapers in the radial direction.

36. The container of claim 33, wherein the flange has a thickness that is substantially uniform along a radial direction of the flange.

37. The container of claim 31, wherein the flange is thicker than the side wall.

38. The container of claim 36, wherein the flange is thinner than the side wall.

39. The container of claim 36, wherein the side wall and flange each has a thickness between about 0.01 inch and about 0.06 inch.

40. A method for making an extrusion blow-molded container, comprising the steps of:
providing an intermediate article according to claim 35; and
severing the accommodation portion from the tubular side wall and flange, thereby forming a container having the radially outwardly extending flange formed at the top end of the side wall.

41. The method of claim 40, wherein the severing step comprises cutting through the intermediate article in a generally radial direction such that a resulting cut surface is substantially flush with the flange.
